# EUROPEAN PATENT APPLICATION

(11) **EP 2 175 127 A2**
(43) Date of publication of application: **14.04.2010**
(21) Application number: 09172048.2
(22) Date of filing: 02.10.2009
(51) Int. Cl.: F03D 1/00

(54) **Wind turbine, environmental monitoring apparatus and method for measuring environmental conditions of a wind turbine**

(30) Priority: 10.10.2008 US 248925
(71) Applicant: General Electric Company, Schenectady, NY 12345 (US)
(72) Inventor: Nies, Jacob Johannes, 8042 HA, Zwolle (NL); Kerber, Lutz Georg Arnd, 10245, Berlin (DE)
(74) Representative: Bedford, Grant Richard

(57) **Abstract**

A wind turbine (100) includes a tower (102), a machine nacelle (103) and a rotor having a plurality of rotor blades (101) and a hub (104). Furthermore the wind turbine includes at least one wind speed sensor device having at least one environmental monitoring apparatus for the detection of at least one environmental condition including a transducer device (200) for converting the detected environmental conditions into an electrical signal and a converter device (201) for converting energy provided by the environment into electrical output energy. The transducer device (200) and the converter device (201) are formed as an associated unit.
A method for measuring environmental condition of a wind turbine (100) and an environmental monitoring apparatus are also disclosed.

## Description

The present disclosure generally relates to an environmental monitoring apparatus adapted for the detection of environmental conditions. Specifically, the present disclosure relates to an environmental monitoring apparatus adapted for measuring wind conditions in the vicinity of a wind turbine adapted to convert wind energy, i.e. natural energy, into electrical energy.

Wind turbines are used to convert wind energy into electrical output energy, wherein a wind turbine including a tower, a machine nacelle and a rotor having a plurality of rotor blades and a hub can be adjusted with respect to the incoming wind direction. The machine nacelle arranged atop the tower is rotatable about a vertical axis, e.g. the tower axis.

In order to rotate the machine nacelle about the tower axis, energy is provided for actuators that rotate the machine nacelle with respect to the incoming wind direction. In case of a grid failure, e.g. in a case where only little or no external energy may be provided, such kind of active adjustment of the machine nacelle is not possible. Due to the grid failure no electrical energy can be provided. Thus it is not possible to yaw towards the incoming wind direction and the hub of the wind turbine cannot be directed towards the incoming wind.

In view of the above, an environmental monitoring apparatus adapted for detecting at least one environmental condition is provided, the environmental monitoring apparatus including a transducer device adapted for converting the detected environmental conditions into an electrical detection signal, and a converter device adapted for converting energy provided by the environment into electrical output energy, wherein the transducer device and the converter device are formed as an associated unit.

According to another aspect a wind turbine is provided including a tower, a machine nacelle and a rotor having a plurality of rotor blades and a hub, said wind turbine further including at least one environmental monitoring apparatus adapted for detecting environmental conditions, having a transducer device adapted for converting the detected environmental conditions into an electrical detection signal, and a converter device adapted for converting energy provided by the environment into electrical output energy, wherein the transducer device and the converter device are formed as an associated unit.

According to yet another aspect a wind speed sensor device for measuring a wind speed vector (magnitude of wind speed and wind direction) is provided, said wind speed sensor device including an anemometer means and a signal processing means for analysing an anemometer output signal, said wind speed sensor device further including a means adapted for converting mechanical energy provided by wind forces into electrical energy, wherein the electrical energy is provided for electrical devices as an auxiliary power supply.

According to yet another aspect a wind turbine including a tower, a machine nacelle and a rotor having a plurality of rotor blades and a hub is provided, said wind turbine further including at least one wind speed sensor device having an anemometer means and a signal processing means adapted for analysing an anemometer output signal, wherein the at least one wind speed sensor device includes an auxiliary power generator adapted for supplying auxiliary power to electrical devices of the wind turbine, wherein the anemometer means is adapted for driving the auxiliary power generator.

According to yet another aspect a method for measuring environmental conditions of a wind turbine including a tower, a machine nacelle and a rotor having a plurality of rotor blades and a hub is provided, said method further including the steps of detecting the environmental conditions of the wind turbine by means of a transducer device, and supplying auxiliary power to electrical devices of the wind turbine by means of a converter device, wherein the transducer device and the converter device are formed as an associated unit.

Various aspects and embodiments of the present invention will now be described in connection with the accompanying drawings, in which:
Fig. 1 illustrates a schematic set-up of a wind turbine;
Fig. 2 is a top view of the wind turbine shown in Fig. 1;
Fig. 3 is a sectional view of the wind turbine shown in Fig. 1, wherein an associated transducer/converter device is arranged at the machine nacelle;
Fig. 4 illustrates a block diagram of an associated transducer/converter device including relevant input and output signals;
Fig. 5 is a sectional top view of a wind turbine having first and second transducer/converter devices mounted atop the machine nacelle according to a typical embodiment;
Fig. 6 is a sectional top view of a wind turbine having first and second transducer/converter devices according to another typical embodiment; and
Fig. 7 is a graph illustrating a method for measuring environmental conditions of a wind turbine according to another typical embodiment.

Reference will now be made in detail to the various exemplary embodiments, one or more examples of which are illustrated in the drawings. Each example is provided by way of explanation and is not meant as a limitation. For example, features illustrated or described as part of one embodiment can be used on or in conjunction with other embodiments to yield yet a further embodiment. It is intended that the present disclosure includes such modifications and variations.

A number of embodiments will be explained below. In this case, identical structural features are identified by identical reference symbols in the drawings. The structures shown in the drawings are not depicted true to scale but rather serve only for the better understanding of the embodiments.

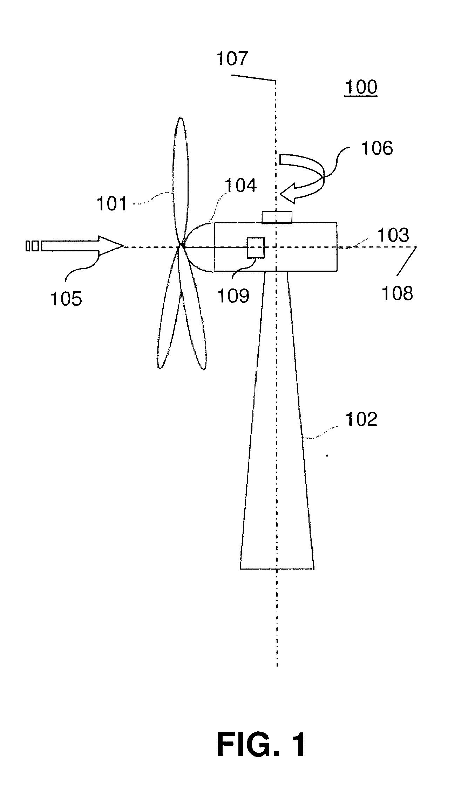

Fig. 1 is an illustrative block diagram of a set-up of a wind turbine 100 having a tower 102, a machine nacelle 103 and a rotor having a plurality of rotor blades 101 and a hub 105.

The machine nacelle 103 is adapted to rotate about a tower axis 107 by a predefined amount, e.g. by a yaw angle 106. The machine nacelle 103 furthermore includes a gear box 109 which is used to connect a main shaft of the rotor to a generator adapted for supplying electrical output energy.

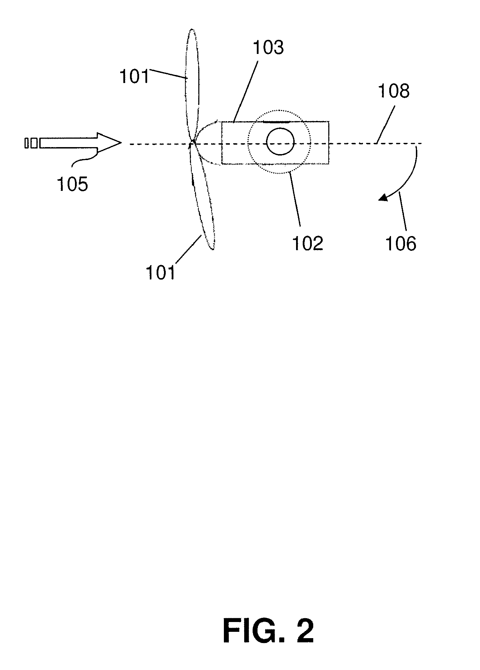

In order to increase the energy conversion efficiency, a rotor axis 108 may be adjusted with respect to an incoming wind direction 105. Specifically, the rotor axis 108 can be adjusted in order to point towards the incoming wind direction 105, as it is depicted more clearly in Fig. 2.

Fig. 2 is a top view of the wind turbine 100 shown in Fig. 1. As shown in Fig. 2, the nacelle 103 of the wind turbine is adjusted towards the incoming wind direction 105, e.g. such that the direction of the rotor axis 108 coincides with the direction of the incoming wind 105. As mentioned above, the machine nacelle 103 can yaw about the tower axis 107 such that the situation shown in Fig. 2 can be realized. This yawing consumes electric energy which is provided by an electrical grid or by auxiliary energy sources.

It is noted here that the adjustment of the nacelle 103 is required in order to withstand possible storms in case of a grid loss. During a storm the nacelle is directed towards the incoming wind because storm loads are lower when the wind comes from the front.

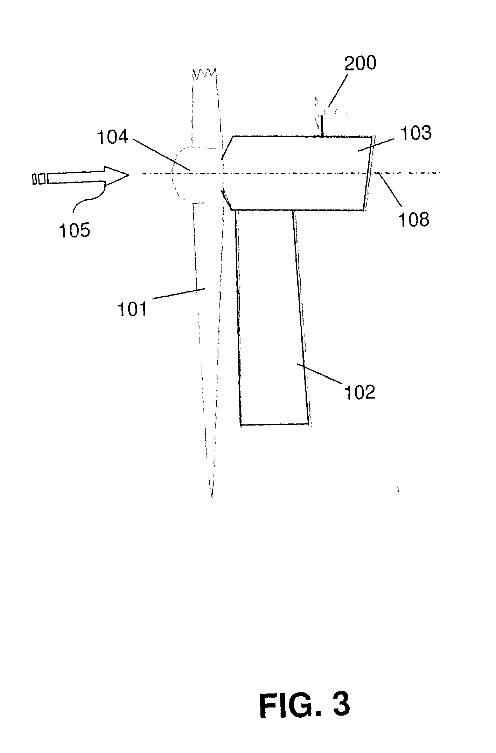

Fig. 3 is a sectional side view of the wind turbine 100 shown in Fig. 1. The rotor having rotor blades 101, the hub 104 rotates about the rotor axis 108. Atop the machine nacelle 103, an associated transducer/converter device 200 is arranged. The associated transducer/converter device 200 itself may be a wind turbine of small size as compared to the wind turbine 100.

It is noted here that the term "associated" also includes the meaning "integrated". Furthermore, "integrated" means any arrangement known in the art so as to reduce costs, or increase power output, or to formulate an efficiency between the components, and does not necessarily mean mechanically coupled to, even though this is one typical embodiment, and may encompass a less preferred configuration where two components are spaced a predetermined distance from one another but share components, or a connection point, data or other integrated relationship while not being mechanically or electrically coupled to one another. "Integrated" may encompass a configuration where the transducer has a housing and the converter has a second housing, and the components simply share a larger housing, or share a connection point, or are integrated to simply share data. Less preferably, the components may simply be arranged to share at least one functional or spatial relationship relative to one another.

Specifically, the associated transducer/converter device can be used to provide electrical output energy which is used to charge an accumulator unit (battery system, energy storage system) which then can provide sufficient power to yaw the machine nacelle 103 about the tower axis 107 in case of a grid failure. Furthermore, the associated transducer/converter device can be used as an environmental monitoring apparatus adapted for the detection of environmental conditions of the wind turbine.

The associated transducer/converter device 200 may be arranged rotatable with respect to the machine nacelle 103 about a substantially vertical axis in order to direct the associated transducer/converter device 200 towards the incoming wind direction. Energy which is required for such a rotation may be supplied via a solar cell mounted at the associated transducer/converter device 200. Furthermore the associated transducer/converter device 200 may be self aligning. The associated transducer/converter device 200 may be an anemometer means.

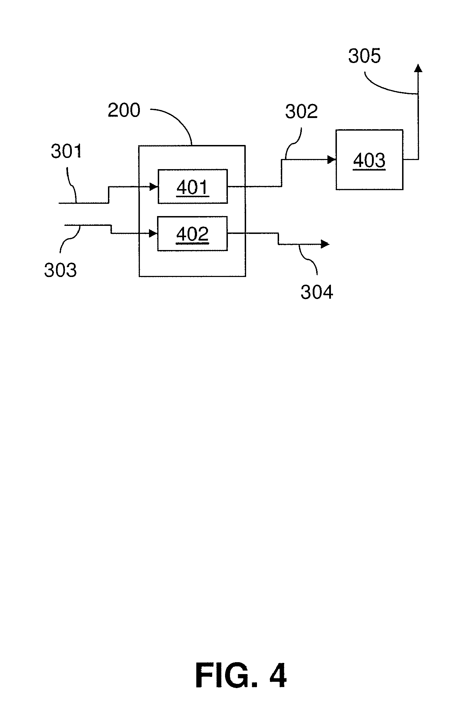

Fig. 4 is a block diagram showing the associated transducer/converter device which is used as a sensor and an energy converter. The associated transducer/converter device 200 includes a transducer device 401 and a converter device 402. The transducer device 401 is adapted to detect environmental conditions 301 and to provide an electrical detection signal 302 in dependence of the detected environmental conditions 301.

The electrical detection signal 302 which is output by the transducer device 401 of the associated transducer/converter device 200 is fed to a processor unit 403 which is adapted to process the electrical detection signal 302 such that a process detection signal 305 can be provided. The process detection signal 305 can be used to measure environmental conditions of the wind turbine 100 shown in Fig. 1, e.g. wind direction, wind velocity or other environmental conditions, such as light intensity. A wind turbulence intensity may be derived from temporally resolved wind speed measurements.

According to a typical embodiment, the associated transducer/converter device includes a converter device 402 which converts environmental energy 303 provided by the environment of the wind turbine 100 into electrical output energy 304. The environmental energy 303 which is input into the converter device 402 of the associated transducer/converter device 200 may be wind energy (i.e. mechanical energy) or light energy (light intensity). The output energy 304 output by the converter device 402 of the associated transducer/converter device may be used as energy in order to provide a yawing of the machine nacelle 103 about the tower axis 107.

Furthermore, it is possible (although not shown in Fig. 4) to provide an energy storage element, i.e. a battery in order to store the energy provided by the converter device 402. In addition to that, the output energy 304 may be provided as an auxiliary power supply for electrical devices of the wind turbine 100. The electrical output energy 304 may be used e.g. to heat the rotor blades 101 of the rotor of the wind turbine in order to prevent icing.

According to the typical embodiment shown in Figs. 3 and 4, the associated transducer/converter device is designed as a combination unit wherein both a transducer device for environmental sensing and a converter device for energy conversion is included.

In the typical embodiment shown in Fig. 3, these environmental conditions may include wind velocity, wind direction and/or wind turbulence.

It is noted here that the associated transducer/converter device is not restricted to transducer devices for measuring wind conditions. In addition to the measurement of wind conditions, it is possible to monitor light intensities wherein the transducer device is a light intensity sensor and the converter device is a solar cell.

In the typical embodiment shown in Fig. 3, the associated transducer/converter device includes a wind speed and wind direction sensor and the converter device includes an electrical generator.

Furthermore, the wind speed and wind direction sensor is adapted to detect wind turbulences.

As an estimate, for a typical wind turbine 100 the yawing power which is required in order to yaw the nacelle 103 of the wind turbine 100 towards the incoming wind direction 105 the yawing power is 6 kW with a peak at 11 kW.

This amount of power may be provided by an accumulator unit or a battery system which is charged using the auxiliary power supply over a long time. During yawing the stored energy is consumed in a comparatively short time.

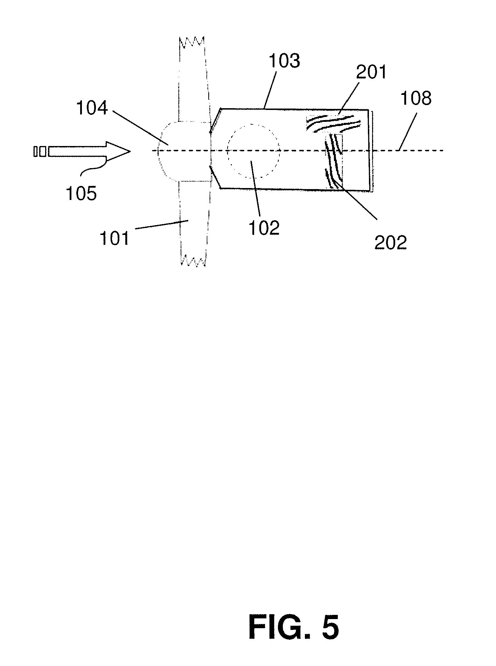

Fig. 5 is a top view of a wind turbine 100 wherein two transducer/converter devices are arranged atop the machine nacelle 103. A first transducer/converter device 201 is arranged having its axis parallel to the rotor axis 108. A second transducer/converter device 202 is arranged atop the machine nacelle, wherein the axis of the second transducer/converter device 202 is arranged substantially orthogonal to the rotor axis 108. Thus it is possible to convert wind energy into electrical energy even if the machine nacelle 103 is not directed exactly towards the incoming wind direction 105. The arrangement of the two transducer/converter devices 201, 202 is such that at least one of the two transducer/converter devices 201, 202 is directed substantially towards the incoming wind direction.

Furthermore, environmental conditions such as wind directions and wind turbulence can be measured even if the environmental conditions are changing rapidly.

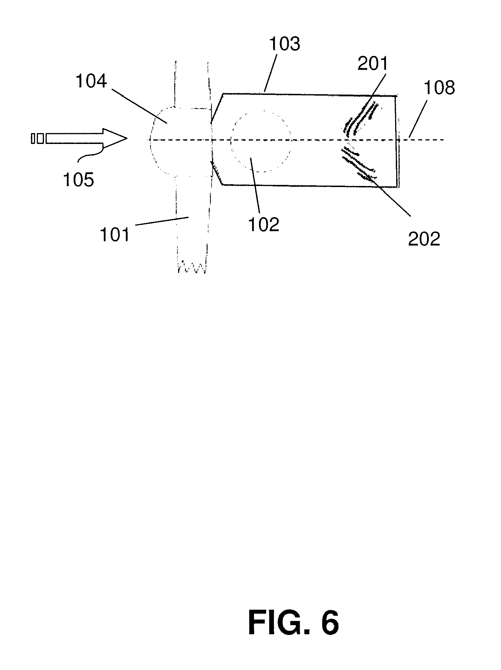

Fig. 6 is a top view of the wind turbine 100 shown in Fig. 1, wherein first and second associated transducer/converter devices 201 and 202, respectively, are arranged atop the machine nacelle 103, according to another typical embodiment.

The first and second transducer/converter devices 201 and 202 are arranged having their axes substantially orthogonal to each other and at an angle of about 45° with respect to the rotor axis 108. Thus, different wind directions can be measured and wind energy can be converted into electrical energy even if the incoming wind direction 105 does not coincide with the rotor axis 108. The arrangement of the two transducer/converter devices 201, 202 is such that at least one of the two transducer/converter devices 201, 202 is directed substantially towards the incoming wind direction. Thus it is possible, according to the typical embodiments shown in Figs. 5 and 6, that wind energy may be converted even if the incoming wind direction is changing.

It is noted here that more than two associated transducer/converter devices 200, 201, 202 may be arranged at the wind turbine 100. Furthermore, it is possible, besides arranging the at least one associated transducer/converter device 200 atop the machine nacelle, that the at least one associated transducer/converter device 200 may be arranged directly at the tower 102. In this case, the at least one associated transducer/converter device does not rotate together with the machine nacelle about the horizontal tower axis 107.

The transducer device 401 and the converter device 402 are formed as an associated unit. Furthermore, the transducer device 401, the converter device 402 and the processor unit 403 may be formed as an associated unit. The at least two transducer/converter devices 201, 202 are arranged at the machine nacelle with their detection axes oriented substantially orthogonal to each other.

In case the transducer device 401 as depicted in Fig. 4 is designed as a wind speed and wind direction sensor, this sensor can be adapted to detect wind turbulences.

The wind speed sensor device for measuring a wind speed vector may include an anemometer means and a signal processing means for analysing the anemometer output signal. The wind speed sensor device may further include a means for converting mechanical energy provided by wind forces into electrical energy, wherein the electrical energy is provided for electrical devices as an auxiliary power supply.

The wind turbine 100 may include at least the anemometer means and the signal processing means for analyzing an anemometer output signal.

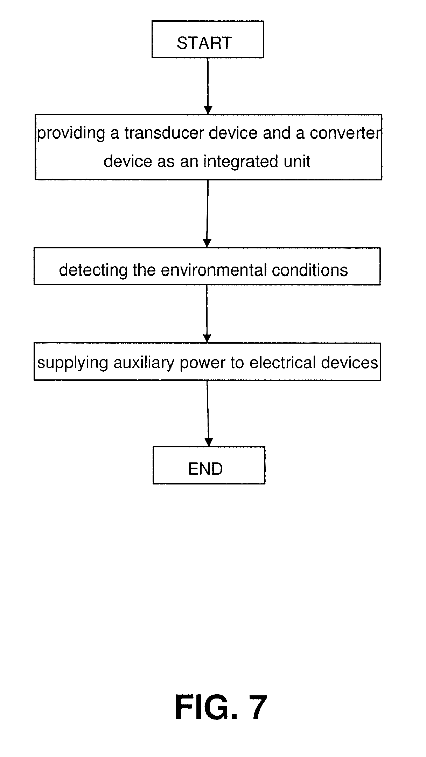

Fig. 7 is a graph illustrating a method for measuring environmental conditions of a wind turbine according to another typical embodiment.

The method for measuring environmental conditions of a wind turbine including a tower, a machine nacelle and a rotor having a plurality of rotor blades and a hub, includes the steps of detecting the environmental conditions of the wind turbine by means of a transducer device, and supplying auxiliary power to electrical devices of the wind turbine by means of a converter device, wherein the transducer device and the converter device are formed as an associated unit.

The steps of detecting the environmental conditions of the wind turbine 100 and the steps of supplying auxiliary power to electrical devices of the wind turbine 100 may be carried out independently. In addition to that, the steps of detecting the environmental conditions of the wind turbine and of supplying auxiliary power to electrical devices of the wind turbine may be carried out in an interleaved manner.

Furthermore, the steps of detecting the environmental conditions of the wind turbine 100 and of supplying auxiliary power to electrical devices of the wind turbine may be carried out simultaneously.

The auxiliary power may be used, as an example, for the yawing and/or pitching of the rotor blades of the wind turbine.

The yawing may be performed in different modes including at least one of different yaw speeds, different settings for a maximum allowed cable twist and a maximum allowed yaw misalignment. These modes may be selected based on various inputs such as past and actual wind speed, accumulator energy level, yaw misalignment, grid availability, etc.

The invention has been described on the basis of embodiments which are shown in the appended drawings and from which further advantages and modifications emerge. However, the invention is not restricted to the embodiments described in concrete terms, but rather can be modified and varied in a suitable manner. It lies within the scope of the invention to combine individual features and combinations of features of one embodiment with features and combinations of features of another embodiment in a suitable manner in order to arrive at further embodiments.

It will be apparent to those skilled in the art, based upon the teachings herein, that changes and modifications may be made without departing from the invention disclosed and its broader aspects. That is, all examples set forth herein above are intended to be exemplary and non-limiting.

Various aspects and embodiments of the present invention are defined by the following numbered clauses:
1. An environmental monitoring apparatus adapted for detecting at least one environmental condition, comprising
   a transducer device adapted for converting the detected environmental conditions into an electrical detection signal; and
   a converter device adapted for converting energy provided by the environment into electrical output energy, wherein
   the transducer device and the converter device are formed as an associated unit.
2. The environmental monitoring apparatus in accordance with clause 1, wherein the transducer device is a wind speed and wind direction sensor and wherein the converter device is an electrical generator.
3. The environmental monitoring apparatus in accordance with any preceding clause, wherein the wind speed and wind direction sensor is adapted to detect temporally varying wind speed in order to derive wind turbulence.
4. The environmental monitoring apparatus in accordance with any preceding clause, wherein the transducer device is a light intensity sensor and wherein the converter device is a solar cell.
5. The environmental monitoring apparatus in accordance with any preceding clause, wherein a processor unit is provided for processing the electrical detection signal.
6. A wind turbine comprising a tower, a machine nacelle and a rotor having a plurality of rotor blades and a hub, said wind turbine further comprising:
   at least one environmental monitoring apparatus adapted for detecting environmental conditions, having
   a transducer device adapted for converting the detected environmental conditions into an electrical detection signal; and
   a converter device adapted for converting energy provided by the environment into electrical output energy, wherein
   the transducer device and the converter device are formed as an associated unit.
7. The wind turbine in accordance with clause 6, wherein two transducer/converter devices are arranged at the machine nacelle with their detection axes oriented substantially orthogonal to each other.
8. The wind turbine in accordance with clause 6 or 7, wherein the transducer device is a wind speed and wind direction sensor and wherein the converter device is an electrical generator.
9. The wind turbine in accordance with any of clauses 6 to 8, wherein the wind speed and wind direction sensor is adapted to detect temporally varying wind speed in order to derive wind turbulence.
10. The wind turbine in accordance with any of clauses 6 to 9, wherein the transducer device is a light intensity sensor and wherein the converter device is a solar cell.
11. A wind speed sensor device for measuring a wind speed vector comprising an anemometer means and a signal processing means for analysing an anemometer output signal, said wind speed sensor device further comprising:
   a means adapted for converting mechanical energy provided by wind forces into electrical energy, wherein
   the electrical energy is provided for electrical devices as an auxiliary power supply.
12. A wind turbine comprising a tower, a machine nacelle and a rotor having a plurality of rotor blades and a hub, said wind turbine further comprising:
   at least one wind speed sensor device comprising an anemometer means and a signal processing means adapted for analysing an anemometer output signal, wherein
   the at least one wind speed sensor device comprises an auxiliary power generator adapted for supplying auxiliary power to electrical devices of the wind turbine, wherein
   the anemometer means is adapted for driving the auxiliary power generator.
13. The wind turbine in accordance with clause 12, wherein two transducer/converter devices are arranged at the machine nacelle with their detection axes oriented substantially orthogonal to each other.
14. The wind turbine in accordance with clause 12 or 13, wherein at least one transducer/converter device is adapted to be rotatable about a substantially vertical axis in order to direct the anemometer means towards the incoming wind direction wherein energy which is required for the rotation is supplied via a solar cell mounted at the anemometer means.
15. A method for measuring environmental conditions of a wind turbine comprising a tower, a machine nacelle and a rotor having a plurality of rotor blades and a hub, said method further comprising:
   detecting the environmental conditions of the wind turbine by means of a transducer device; and
   supplying auxiliary power to electrical devices of the wind turbine by means of a converter device, wherein
   the transducer device and the converter device are formed as an associated unit.
16. The method in accordance with clause 15, wherein the steps of detecting the environmental conditions of the wind turbine and of supplying auxiliary power to electrical devices of the wind turbine are carried out simultaneously.
17. The method in accordance with clause 15 or 16, wherein the steps of detecting the environmental conditions of the wind turbine and of supplying auxiliary power to electrical devices of the wind turbine are carried out independently.
18. The method in accordance with any of clauses 15 to 17, wherein the steps of detecting the environmental conditions of the wind turbine and of supplying auxiliary power to electrical devices of the wind turbine are carried out in an interleaved manner.
19. The method in accordance with any of clauses 15 to 18, wherein an accumulator unit is provided which is charged by the auxiliary power.
20. The method in accordance with any of clauses 15 to 19, wherein the accumulator unit provides power used for yawing and/or pitching of the rotor blades of the wind turbine.
21. The method in accordance with any of clauses 15 to 20, wherein the yawing is performed in different modes comprising at least one of different yaw speeds, different settings for a maximum allowed cable twist and a maximum allowed yaw misalignment.

## Claims

1. An environmental monitoring apparatus adapted for detecting at least one environmental condition, comprising
a transducer device (401) adapted for converting the detected environmental conditions into an electrical detection signal (302); and
a converter device (402) adapted for converting energy provided by the environment into electrical output energy, wherein
the transducer device (401) and the converter device (402) are formed as an associated unit (200).

2. The environmental monitoring apparatus in accordance with claim 1, wherein the transducer device (401) is a wind speed and wind direction sensor and wherein the converter device (402) is an electrical generator.

3. The environmental monitoring apparatus in accordance with claim 2, wherein the wind speed and wind direction sensor is adapted to detect temporally varying wind speed in order to derive wind turbulence.

4. The environmental monitoring apparatus in accordance with any preceding claim, wherein the transducer device (401) is a light intensity sensor and wherein the converter device (402) is a solar cell.

5. The environmental monitoring apparatus in accordance with any preceding claim, wherein a processor unit (403) is provided for processing the electrical detection signal (302).

6. A wind turbine (100), comprising:
at least one environmental monitoring apparatus according to any of the preceding claims, wherein two transducer/converter devices (201, 202) are arranged at a machine nacelle (103) of the wind turbine (100) with their detection axes oriented substantially orthogonal to each other.

7. A wind turbine (100), comprising:
at least one wind speed sensor device comprising an anemometer means and a signal processing means adapted for analysing an anemometer output signal, wherein
the at least one wind speed sensor device comprises an auxiliary power generator adapted for supplying auxiliary power to electrical devices of the wind turbine, wherein
the anemometer means is adapted for driving the auxiliary power generator.

8. The wind turbine (100) in accordance with claim 6 or claim 7, wherein two transducer/converter devices (201, 202) are arranged at a machine nacelle (103) of the wind turbine (100) with their detection axes oriented substantially orthogonal to each other.

9. The wind turbine (100) in accordance with any of claims 6 to 8, wherein at least one transducer/converter device is adapted to be rotatable about a substantially vertical axis in order to direct the anemometer means towards the incoming wind direction wherein energy which is required for the rotation is supplied via a solar cell mounted at the anemometer means.

10. A method for measuring environmental conditions of a wind turbine (100), comprising:
detecting the environmental conditions of the wind turbine (100) by means of a transducer device (201, 202); and
supplying auxiliary power to electrical devices of the wind turbine (100) by means of a converter device, wherein
the transducer device and the converter device are formed as an associated unit.
